# NEUE EUROPÄISCHE PATENTSCHRIFT

(11) **EP 0 937 305 B2**
(45) Veröffentlichungstag und Bekanntmachung des Hinweises auf die Entscheidung über den Einspruch: **30.06.2004**
(45) Hinweis auf die Patenterteilung: 12.07.2000
(21) Anmeldenummer: 97911184.6
(22) Anmeldetag: 07.10.1997
(51) Int. Cl.: H01H 1/58

(54) **SCHALTERSYSTEM IN MID-TECHNIK**
SWITCH SYSTEM OPERATING BY THE MID TECHNIQUE
SYSTEME DE COMMUTATEUR SELON LA TECHNIQUE MID

(30) Priorität: 07.11.1996 DE 19645822
(43) Veröffentlichungstag der Anmeldung: 25.08.1999
(73) Patentinhaber: ITT MANUFACTURING ENTERPRISES, INC., Wilmington, Delaware 19801 (US)
(72) Erfinder: BÖTZ, Jacob, D-74379 Ingersheim (DE); WEBER, Adam, D-74321 Bietigheim-Bissingen (DE)
(74) Vertreter: Dreiss, Fuhlendorf, Steimle & Becker
(86) Internationale Anmeldenummer: PCT/EP1997/005496
(87) Internationale Veröffentlichungsnummer: WO 1998/020508

(56) Entgegenhaltungen:
- WO-A-95/00963
- DE-A- 4 426 350
- US-A- 5 290 983
- US-A- 5 359 165

## Beschreibung

Die Erfindung betrifft ein Schaltersystem in MID-Technik. Hiermit sind räumlich spritzgegossene Leitungsträger gemeint, bei der die Leitungen in ein räumliches Gehäuse direkt eingefügt sind. Dabei können mehrere Leiterschichten innerhalb des Gehäuses vergossen sein. Es können aber auch leiterbahnähnliche Kunststoffstrukturen in ein Gehäuse eingegossen sein, welche sich nachträglich metallisieren und isolieren lassen. Auf diese Weise verlaufen die Leiterbahnen auf der sich in drei Raumrichtungen (3D) erstreckenden Gehäuseoberfläche. Nähere Einzelheiten hierzu lassen sich aus der Zeitschrift "Elektronik", Jahrgang 15, vom 20.07.1990 (Seite 28 - 31) entnehmen. Weitere Hinweise gibt eine Anzeige der Forschungsvereinigung räumliche elektronische Baugruppen 3-D MID e.V.. Die vorliegende Erfindung befaßt sich mit der Anwendung dieser Techniken auf ein Schaltersystem, insbesondere auf dem Gebiet der Kraftfahrzeugtechnik.

Durch die ständig wachsende Anzahl elektrischer und elektronisch arbeitender Fahrhilfen in Kraftfahrzeugen ist auch der Bedarf an Schaltern gewachsen. Schalter herkömmlicher Bauart bestehen im wesentlichen aus Taste, Gehäuse, Kontaktsystem, mechanische Rastung, Grundplatte und Kontaktstecker. Ziel der Erfindung ist es, den Aufbau derartiger Schalter zu vereinfachen und gleichzeitig die räumlichen Abmessungen herabzusetzen.

Eine mögliche Anwendung der MID-Technik auf Schalter ist in der DT-OS 44 26 350.3 beschrieben. Dieses Dokument definiert den nächstliegenden Stand der Technik. Die Erfindung geht daher aus von einem derartigen Schaltersystem der sich aus dem Oberbegriff des Anspruchs 1 ergebenden Gattung. Die o.g. Aufgabe wird gelöst durch die sich aus dem Anspruch 1 ergebende Merkmalskombination. Die Erfindung besteht im Prinzip also darin, das Schaltergehäuse derart auszugestalten, daß es auf der einen Seite eine einfache automatische Bestückung des Schaltergehäuses mit elektrischen und/oder mechanischen Bauteilen zuläßt, andererseits aber auch die Vorteile der MID-Technik voll ausnutzt. Auf diese Weise entsteht ein Schaltersystem, welches flexibel bestückt und auch durch Bestücken mit Leiterbahnträgern flexibel beschattet werden kann. Ein derartiges System bringt insbesondere dadurch Vorteile, da hierdurch das erfindungsgemäße Gehäuse sehr variabel einsetzbar ist und hierdurch die für die MID-Technik notwendigen hohen Stückzahlen erreicht werden, um eine wirtschaftliche Fertigung des Schalters zu gewährleisten.

Zusätzlich nutzt das erfindungsgemäße Gehäuse die Möglichkeiten der MID-Technik auch insofern aus, als gleichzeitig der Anschlußstecker als angegossenes Kunststoffteil ausgestaltet ist, wobei die als Anschlußstecker dienenden Kunststoff vorsprünge metallisiert sind.

Selbstverständlich liegt es auch noch im Rahmen der Erfindung, wenn in Sonderfällen elektrisch oder mechanisch stark beanspruchte Teile in das Kunststoffgehäuse eingegossen werden. Das kann beispielsweise dadurch geschehen, daß der Steckerabschnitt des Gehäuses mit eingegossenen Stiften versehen ist, um eine dauerhafte Kontaktgabe auch dann zu gewährleisten, wenn der Schalter mehrfach eingesteckt werden muß oder andernfalls die den Stecker bildenden Leiterbahnen elektrisch oder mechanisch zu stark belastet würden.

Da die Bestückungsflächen auf der Gehäuseoberseite liegen, während das Steckerteil auf der Gehäuseunterseite angeordnet ist, werden in der Regel die üblichen Durchkontaktierungen notwendig sein, um eine Leitungsverbindung von der Gehäuseoberseite zur Unterseite zu schaffen.

Auch durch derartige Durchkontaktierungen lassen sich Schaltungsänderungen in dem Schaltersystem erreichen, indem manche Kontaktierungsöffnungen leitend ausgeführt werden, während die anderen keine leitende Verbindung erhalten.

Es läßt sich aber nicht nur die Beschaltung in dem Gehäuse zu ändern, sondern es können auch unterschiedliche Schaltertypen gebildet werden. So können die Mikro-Schalter derart ausgewählt sein, daß sie bei ihrer Betätigung einen Stromkreis schließen bzw einen Stromkreis öffnen oder auf einen anderen Stromkreis umschalten oder bei der Betätigung gleich mehrerer dieser Vorgänge gleichzeitig ausführen. Diese verschiedenen Mikroschaltertypen können gleichzeitig mehrfach in das erfindungsgemäße Gehäuse eingesetzt und untereinander kombiniert werden. Es ist aber auch möglich, zusätzlich zu einem Mikroschalter oder anstatt eines Mikroschalters eine LED einzusetzen, die entweder in der Kraftfahrzeugtechnik dem Fahrer die Lage des Schalters (bei Dunkelheit) oder den Zustand des Schalters (eingeschaltet bzw. ausgeschaltet) anzeigt.

Schließlich kann aber auch das erfindungsgemäße Gehäuse derart bestückt sein, daß überhaupt kein Mikroschalter vorgesehen ist und daß das Gehäuse nur mittels der LED Anzeigefunktionen übernimmt.

Es ist zwar möglich, daß die Mikroschalter manuell oder durch mechanische Betätigungsglieder direkt betätigt werden oder daß die Anzeigefläche direkt durch die Oberfläche des erfindungsgemäßen Gehäuses gebildet wird. Vielfach wird man aber die elektrische Schaltung auf der Oberfläche des Gehäuses schützen oder aus ästhetischen Gründen abdecken. Es wird also auf das Gehäuse eine Kappe aufgesetzt, die die Beschaltung auf dem Gehäuse abschirmt und vor mechanischem Zugriff schützt. Hierdurch kann beispielsweise durch Einsatz von Linsen in der Kappe oder von Fenstern, die wiederum mit Symbolen versehen sein können, der Bedienungsperson des Fahrzeugs eine Hilfe gegeben werden.

Eine einfache Betätigungsart der auf der Gehäuseoberfläche aufgebrachten Mikroschalter läßt sich erreichen. Dabei dient die Kappe als Taste für die Schalter, wobei die Kappe wiederum manuell oder auch mechanisch betätigt sein kann. Dabei ist allerdings zu berücksichtigen, daß für den Schaltweg unterschiedliche Forderungen zu stellen sind. Soll beispielsweise durch die Kappe die Taste eines Druckschalters dargestellt werden, so genügt ein vergleichsweise kleiner Betätigungsweg. Das gleiche gilt, wenn der Stromkreis nur so lange betätigt sein soll, wenn ein Druck auf die Taste ausgeübt wird. Andererseits kann es aber erwünscht sein, daß durch die Position der Taste gleichzeitig ein Hinweis auf den Schaltzustand des Schalters gegeben wird. Dies kann beispielsweise bei einem Druckschalter die Tiefenlage der Drucktaste oder bei einem Kippschalter die Kipplage der Taste sein. Es sind also hier erhebliche Schaltwege notwendig, um die Lage der Taste für die Bedienungsperson eindeutig erkennbar zu machen. Um auch diese Forderung bei dem erfindungsgemäßen Gehäuse erfüllen zu können, ist vorgesehen, daß auf das Gehäuse ein Aufsatz aufgesteckt wird, welcher durch eine entsprechende Lagerung der Kappe für einen verlängernden Druckweg oder Kippweg sorgt.

Soll die Kappe gegenüber dem Adapter und dem Gehäuse kippbar sein, so empfiehlt sich in Weiterbildung der Erfindung die Merkmalskombination nach Anspruch 3. Dabei wird man den Drehpunkt so hoch wie möglich legen, damit für die Kappe ein möglichst großer Drehwinkel erreicht wird, ehe sie an dem Gehäuse anschlägt.

Es ist im Rahmen der Erfindung aber auch möglich, daß die Kappe selbst in MID-Technik gefertigt ist und somit als bewegbares Schaltglied wirkt. Dabei kann sie sowohl als Schaltstück in einen Drucktaster arbeiten, aber auch als kippendes Schaltstück in einem Kippschalter. Diese Schaltfunktionen können zusätzlich zu der Betätigung der auf dem Gehäuse sitzenden Mikroschalter oder auch statt dieser Mikroschalter gewählt werden.

Um einen dauerhaften Schaltzustand zu erreichen und um die Lage der Kappe entsprechend der Schaltlage der betätigten Schalter zu fixieren, empfiehlt sich in Weiterbildung der Erfindung die Merkmalskombination nach Anspruch 4. Der wesentliche Vorteil hierbei ist, daß die Rastanordnung durch die Wahl des Adapters und der Kappe für den gewählten Schalter einfach angepaßt werden kann. Somit sorgt der Adapter in Verbindung mit der Taste gleichzeitig für die erwünschten Raststellungen. Hierdurch sind weitere Mittel gegeben das erfindungsgemäße Gehäuse an den wechselnden Bedarf von Schaltern anzupassen.

Eine besonders einfache Rastmöglichkeit ergibt sich durch die Wahl der Merkmale nach Anspruch 5. Dabei werden die Raststellungen im wesentlichen durch den Adapter vorgegeben, so daß durch die Wahl eines entsprechenden Adapters auch die erwünschten Raststellungen erreicht werden können, ohne die Kappe auszuwechseln. Durch die Ausgestaltung der Kappe in MID-Technik entsprechend der Merkmalskombination nach Anspruch 6, lassen sich für das erfindungsgemäße Schaltersystem eine Reihe weiterer Vorteile erzielen. Zum einen kann wie weiter oben schon erwähnt, die Kappe selbst als Schaltstück dienen. In Sonderfällen ist es auch möglich, die Kappe hierzu mit einem metallischen Schaltglied zu bestücken, welches beispielsweise eingegossen sein kann, um die Schaltqualität der Kappe zu verbessern. Durch das Einfügen von Leiterbahnen in die Kappe kann entsprechend der Merkmalskombination nach Anspruch 8 aber auch eine Leuchte (beispielsweise LED) in die Kappe selbst eingefügt werden, so daß spezielle Lichtleiter vermieden werden. Dabei muß allerdings für eine Stromzufuhr für die Leuchte gesorgt werden, was beispielsweise über die Rastverbindung oder bei beweglicher Kappe über das die Bewegung ermöglichende Lager geschehen kann. Anspruch 9 beschreibt nochmals die prinzipielle Möglichkeit, an geeigneten Stellen die gewünschten Eigenschaften erzielende Komponenten in das Gehäuse (bzw. die Kappe) einzugießen, so daß hier sich Verbesserungen auf mechanischem oder elektrischem Gebiet erreichen lassen.

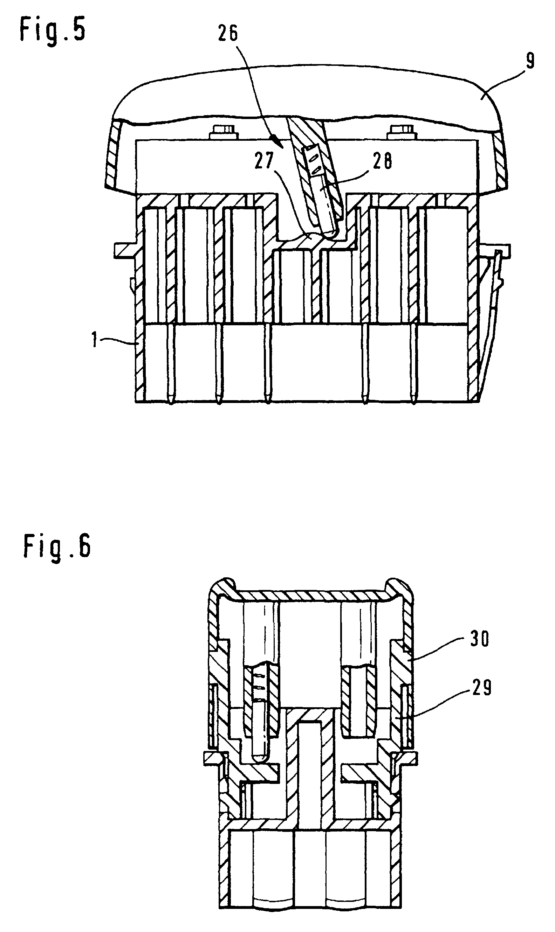

Ein Ausführungsbeispiel der Erfindung wird nachfolgend anhand der Figur 6 erläutert. Es zeigen:
- Fig. 1: eine erste Ausführungsform eines Gehäuses mit einer kippbaren Kappe,
- Fig. 2: eine höhergezogene Gehauseform mit einer fest aufgerasteten Kappe,
- Fig. 3: das Gehäuse nach Fig. 3 in Frontansicht,
- Fig. 4: das Gehäuse nach Fig. 2 mit einer kippbaren Kappe,
- Fig. 5: das Gehäuse nach Fig. 4 mit einer Rastanordnung,
- Fig. 6: das Gehäuse nach Fig. 4 in geschnittener Frontansicht mit eingesetztem Adapter und darauf montierter kippbarer Kappe gemäß der Erfindung,
- Fig. 7: eine Draufsicht auf das Gehäuse nach Fig. 2 mit zur Bestückung vorbereiteten Lötkontakten und
- Fig. 8: die Gehäuseansicht nach Fig. 7 mit Bestükkung durch LED's und Mikroschaltern.

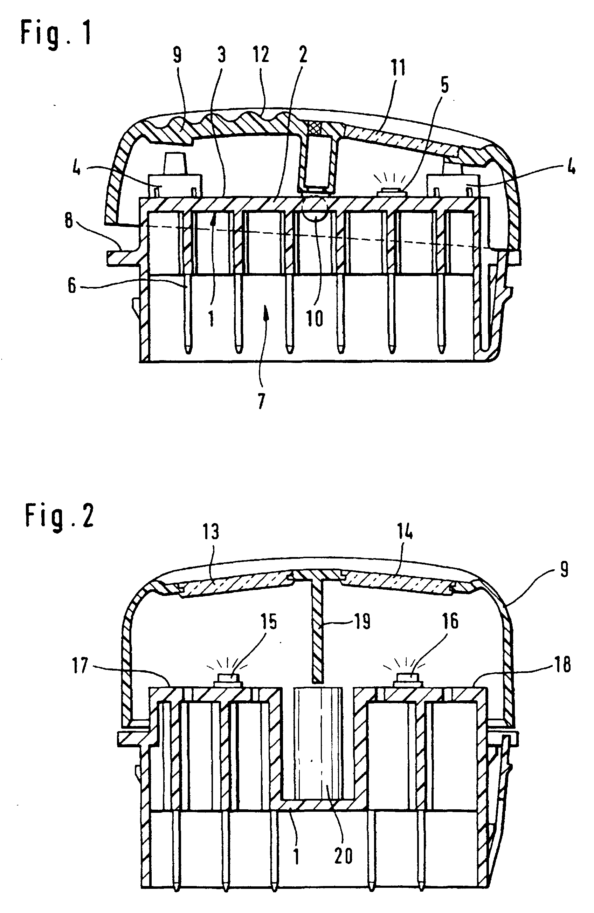

In Fig. 1 ist ein Gehäuse 1 dargestellt, welches in MID-Technik gefertigt ist. Das bedeutet, daß innerhalb des gegossenen Gehäuses die Leiterbahnen und elektrischen Verbindungen bereits eingegossen oder an der Oberfläche herausgearbeitet sind. Das Gehäuse 1 besitzt auf der Gehäuseinnenseite bzw. Gehäuseoberseite 2 mindestens eine ebene Bestükkungsfläche 3, auf welcher Bauelemente in SMD-Technik (Surface Mounted Device) durch Automaten aufgesetzt und angelötet werden können. Als Bauelemente sind hier Mikroschalter 4 und eine LED 5 vorgesehen.

Das Gehäuse besitzt an seiner Unterseite angegossene Vorsprünge 6, deren Oberfläche als elektrisch leitende Leiterbahnen ausgestaltet sind, so daß die Vorsprünge 6 in ihrer Gesamtheit als Stecker wirken. An dem Gehäuse 1 sind weiterhin Anschläge 8 zur Begrenzung der Kippbewegung einer Kappe 9 vorgesehen, welche über Drehbolzen 10 eines nicht näher dargestellten Drehlagers schwenkbar ist. In die Kappe 9 ist ein Fenster 11 eingefügt, über welches der Lichtstrom der LED 5 erkennbar ist. Auf der Kappe 9 ist noch an deren Oberfläche eine Grifffläche 12 eingearbeitet.

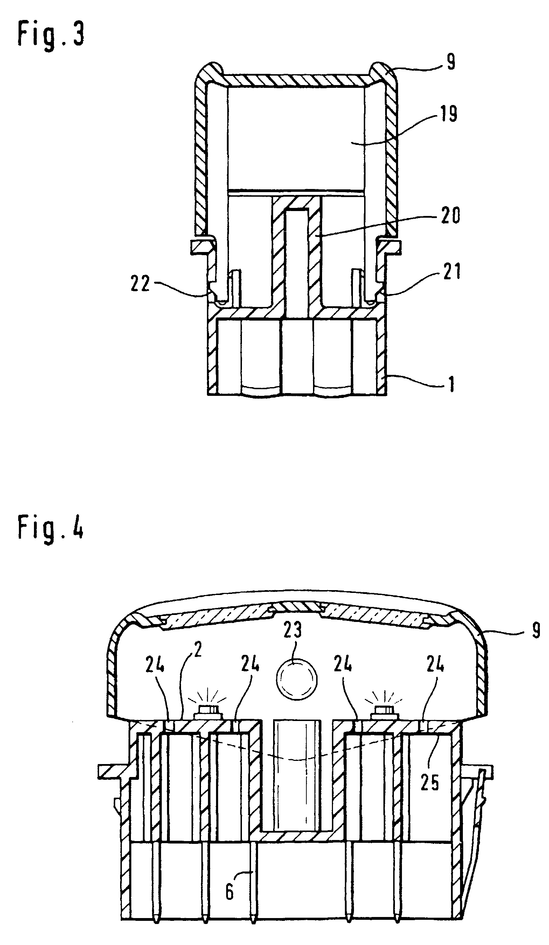

Fig. 2 zeigt eine etwas geänderte Ausführung des Gehäuses 1, wobei die Änderungen dazu dienen, die Gehäuseform an die Form gebräuchlicher Schalter anzupassen. Für die Erfindung wichtig ist, daß bei dem Ausführungsbeispiel nach Fig. 2 die Kappe 9 auf das Gehäuse 1 (siehe auch Fig. 3) aufgerastet ist und somit mit dem Gehäuse 1 starr verbunden ist. Das Gehäuse besitzt zwei Fenster 13,14, die in geeigneter Weise in die Kappe eingefügt oder auch in diese eingegossen sein können. Durch diese Fenster 13,14 strahlt der Lichtstrom der LED's 15,16, welche auf die Bestükkungsflächen 17,18 in SMD-Technik aufgesetzt sind. Die Bestückungsflächen 17,18 sind hochgelegt, um bei der Bestückung Automaten verwenden zu können, die nicht tiefliegende Bestückungsflächen erreichen können.

Die Kappe 9 in Fig. 2 besitzt eine Trennwand 19, die den Lichtstrom der beiden LED's 15,16 voneinander trennt. Es ist aber auch möglich, daß auf dem Gehäuse 1 noch eine zusätzliche Diode auf einem Sockel 20 angeordnet wird, wobei allerdings hier zwei Trennwände vorgesehen werden müssen.

Fig. 3 zeigt eine teilweise geschnittene Frontansicht des Gehäuses nach Fig. 2, wobei deutlich zu erkennen ist, daß die Kappe über Verrastungen 21,22 auf das Gehäuse 1 aufgerastet ist.

In Fig. 4 ist die Kappe 9 gemäß Fig. 2 über ein Drehlager 23 kippbar an dem Gehäuse befestigt. Hierzu können an dem Gehäuse entsprechende seitliche Wände hochgezogen sein. Es kann aber auch ein Adapter entsprechend Fig. 6 eingesetzt werden, welcher weiter unten noch näher erläutert wird. Aus Fig. 4 sind auch die Wand des Gehäuses durchdringende Bohrungen 24 zu erkennen, welche der Durchkontaktierung dienen und somit die Leiterbahnen auf der Gehäuseoberseite 2 mit der Gehäuseunterseite 25 verbinden. Auf diese Weise können die Anschlüsse für Mikroschalterdioden oder andere elektrische Bauelemente mit den als Stekker 7 wirkenden Vorsprüngen 6 verbunden werden.

Fig. 5 zeigt das Gehäuse nach Fig. 4, wobei noch eine Rastschaltung vorgesehen ist. Dabei ist das Gehäuse 1 mit einer Rastkurve 27 versehen, auf die ein in der Kappe 9 federnd gelagerter Rastbolzen 28 einwirkt.

Fig. 6 zeigt die Gehäusedarstellung nach Fig. 4, wobei allerdings ein Adapter 29 verwendet wurde. Der Adapter hat die Aufgabe, den Drehpunkt der Kappe über die Bestückungsebene 2 des Gehäuses zu verlegen. Auf diese Weise ist es möglich, zum einen das Gehäuse vergleichsweise flach zu halten, wenn es entsprechend Fig. 2 rein zu Anzeigezwecken benötigt wird. Bei einer Reihe von Bestückungsautomaten ist es, insbesondere dann, wenn eine große Anzahl von nebeneinander angeordneten Gehäusen gleichzeitig bestückt werden sollen, nicht möglich, daß der über die Gehäuse fahrende Bestückungsautomat zu tieferliegenden Bestückungsflächen hinabtaucht. Die Bestückungsflächen sollten daher hinsichtlich des Gehäuses in der obersten Ebene liegen. In diesem Falle wäre es aber nicht möglich, ohne Adapter den Drehpunkt der Kappe über die Bestückungsebene hinaus zu verlegen. Um gleichwohl aber dennoch einen großen Schaltweg für die Kappe zu erreichen, wird die Bestückung zuerst vorgenommen und dann der Adapter mit der Kappe auf das bestückte Gehäuse aufgesetzt. Wie aus dem Vergleich von Fig. 3 und 6 ersichtlich, sind die Verrastungen 21,22 für den Adapter und die Kappe 9 identisch, so daß statt der Kappe 9 in Fig. 3 der Adapter 29 in die Verrastungen 21,22 eingesetzt werden kann.

In Fig. 6 ist weiterhin eine der Rastschaltung 26,27 entsprechende Rastschaltung in Vorderansicht dargestellt. Dabei kann die Rastkurve sowohl am Gehäuse als auch am Adapter angeordnet sein, wobei die zweite Möglichkeit aus eingangs angegebenen Gründen bevorzugt verwendet wird.

Wie aus Fig. 6 ersichtlich, sind in der Kappe 9 zwei Rastschaltungen vorbereitet, so daß auch durch ein Verdrehen der Kappe ein abweichender Rastverlauf erreicht werden kann.

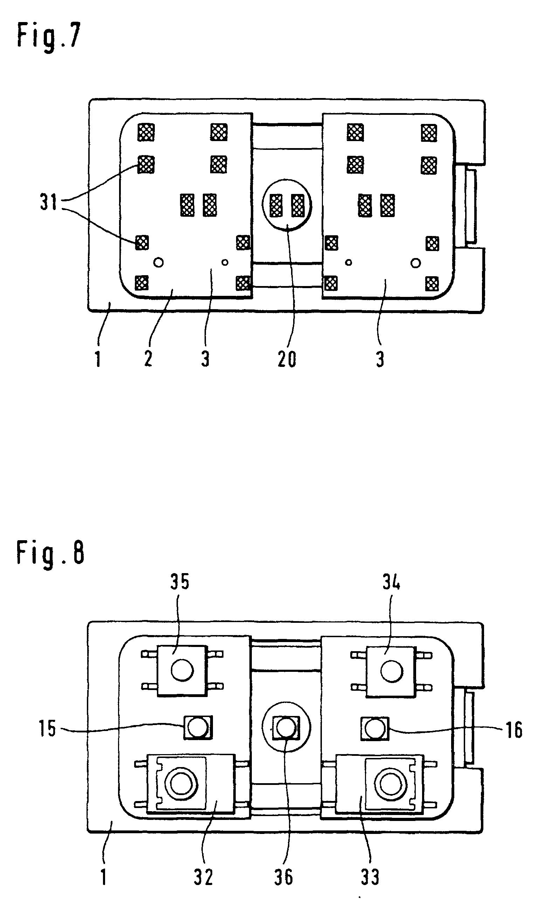

Fig. 7 zeigt eine Draufsicht auf das Gehäuse und speziell die Bestückungsflächen 3 der Gehäuseoberseite 2. Dabei sind die vorbereiteten Lötpunkte 31 zu erkennen, die als Anschlußpunkte für elektrische Bauelemente dienen. Das können beispielsweise die Mikroschalter 33 bis 35 und/oder die LED's 15,16,36 sein (siehe Fig. 8). Dabei ist auch die Kombination denkbar, daß der Kippschalter nur mit einer zentral auf dem Sockel befindlichen LED 36 versehen wird, während die beiden LED's 15,16 wegfallen. Fig. 7 und 8 zeigen auch die Möglichkeit, Mikroschalter unterschiedlicher Gattung und Form auf der Bestückungsfläche 3 anzuordnen, so daß diese Mikroschalter in beliebiger Kombination wahlweise bestückt werden können.

## Patentansprüche

1. Schaltersystem
mit einem Gehäuse (1),
welches als räumlich spritzgegossener Leitungsträger (MID) ausgestaltet ist,
**dadurch gekennzeichnet,**
**dass** die Oberfläche der Gehäuseinnenseite bzw. Gehäuseoberseite (2) mindestens eine ebene Bestückungsfläche (3) bildet,
**dass** die Bestückungsfläche hinsichtlich des Gehäuses (1) in der obersten Ebene derart liegt, dass sie mit Automaten bestückbar ist, die nicht tiefliegende Bestückungsflächen erreichen können,
**dass** auf der Bestückungsfläche (3) mechanische und/oder elektrische Bauelemente (15, 16, 32 - 36) aufgesetzt sind und
**dass** auf der Gehäuseunterseite (25) einstückig angegossene Gehäusevorsprünge (6) vorgesehen sind,
welche mit elektrischen Kontakten versehen sind und welche ein Anschlusssteckteil für elektrische Anschlussstecker bilden
**daß** oberhalb der Gehäuseoberseite (2) eine Kappe (9) angeordnet ist,
**daß** die Kappe (9) gegenüber dem Gehäuse (1) bewegbar, insbesondere kippbar angeordnet ist, und
**daß** zwischen Kappe (9) und Gehäuse (1) ein Adapter (29) eingefügt ist, wobei der Adapter mit dem Gehäuse verrastet (21,22) ist.

2. Schaltersystem nach Anspruch 1, **dadurch gekennzeichnet, daß** zumindest eines der Bauelemente (15,16,32-36) durch einen Mikroschalter (32-35) oder durch eine LED (15,16,36) gebildet ist.

3. Schaltersystem nach Anspruch 1, **dadurch gekennzeichnet, daß** die Kappe (9) in dem Adapter über ein Schwenklager (30) drehbar gelagert ist.

4. Schaltersystem nach einem der Ansprüche 1 bis 3,
**dadurch gekennzeichnet, daß** der Adapter mit der Kappe eine Rastanordnung (27,28) bildet, die aus einer Rastkurve (27) und einem Rastnocken (28) gebildet ist, die elastisch ineinander greifen.

5. Schaltersystem nach Anspruch 4, **dadurch gekennzeichnet, daß** die Rastkurve in dem Adapter (29) und der Rastnocken (28) durch einen an der Kappe federnd abgestützten Rastbolzen (28) gebildet ist.

6. Schaltersystem nach einem der Ansprüche 1 bis 5, **dadurch gekennzeichnet, daß** die Kappe (9) ebenfalls als spritzgegossener Leitungsträger (MID) ausgestaltet ist.

7. Schaltersystem nach einem der Ansprüche 1 bis 6, **dadurch gekennzeichnet, daß** die Kappe als Schaltwippe eines Kippschalters dient.

8. Schaltersystem nach einem der Ansprüche 6 oder 7, **dadurch gekennzeichnet, daß** in die Kappenfläche eine von der Kappenaußenseite erkennbare Leuchte insbesondere LED eingefügt ist und daß die Stromzufuhr über die Rastverbindung (21,22) o bzw. das Schwenklager (30) der Kappe (9) zugeführt ist.

9. Schaltersystem nach einem der vorangegangenen Ansprüche, **dadurch gekennzeichnet, daß** an mechanisch und/oder elektrisch stark belasteten Bereichen den Anforderungen genügende Materialien eingefügt sind.

## Claims

1. Switch system with a housing (1), which is designed as a three-dimensional injection-moulded conductor support (MID), **characterised by** the fact that the surface of the inside or upper side (2) of the housing forms at least one flat component surface (3), that the component surface is located, with respect to the housing (1), in the upper plane in such a way that it can be equipped with automatons which cannot reach the low-lying component surfaces, that mechanical and/or electrical components (15, 16, 32-36) are placed on the component surface (3), and that on the underside (25) of the housing are provided solid moulded housing projections (6), which are fitted with electrical contacts and which form a connector component for electrical cable connectors, that above the upper aide of the housing (2) is arranged a cover (9), that the cover (9) is movable, in particular, tiltable, with respect to the housing (1), and between the cover (9) and the housing (1) is inserted an adapter (29) in which the adapter is latched with the housing (21, 22).

2. Switch system according to Claim 1, **characterised by** the fact that at least one of the components (15, 16, 32-36) is formed by a microswitch (32-35) or by an LED (15, 16, 36).

3. Switch system according to Claim 1, **characterised by** the fact that the cover (9) is pivoted in the adapter via a swivel bearing (30).

4. Switch system according to one of the Claims 1 through 3, **characterised by** the fact that the adapter and the cover form a latch configuration (27, 28) formed by a latching curve (27) and a detent cam (28), which elastically interlock.

5. Switch system according to Claim 4, **characterised by** the fact that the latching curve in the adapter (29) and the detent cam (28) are formed by a stop bolt (28) which is spring-loaded at the cover.

6. Switch system according to one of the Claims 1 through 5, **characterised by** the fact that the cover (9) also is provided with an injection-moulded conductor support (MID).

7. Switch system according to one of the Claims 1 through 6, **characterised by** the fact that the cover functions as an operating rocker of a toggle switch.

8. Switch system according to one of the Claims 6 or 7, **characterised by** the fact that into the cover surface is inserted a lamp, in particular, an LED which is visible from the outside of the cover, and that the power supply is provided via the latch connection (21, 22) or the swivel bearing (30) of the cover (9).

9. Switch system according to one of the previous claims, **characterised by** the fact that materials that adequately meet the requirements are inserted at the areas subjected to severe mechanical and/or electrical stress.

## Revendications

1. Système de commutateur comportant un bottier (1) qui est conçu comme porte-conducteurs moulé par injection à trois dimensions (technique MID), **caractérisé en ce que** la face supérieure du côté intérieur du boîtier respectivement du côte supérieur du boîtier (2) forme au moins une surface d'équipement plane (3), **en ce que** la surface d'équipement en vis-a-vis du boîtier (1) placée dans le plan le plus haut peut être équipée avec des automates, lesquels ne peuvent pas atteindre des surfaces d'équipement inférieures, **en ce que** sur la surface d'équipement (3) sont montés des composants mécaniques et/ou électriques (15, 16, 32-36), et **en ce que** des saillies de boîtier (6), faisant corps avec la pièce moulée, sont prévues sur le côté inférieur (25) du boîtier, saillies qui sont pourvues de contacts électriques et qui forment une partie de fiche de raccordement pour des connecteurs électriques, **en ce qu'**un capot (9) est disposé au-dessus du côte supérieur (2) du boîtier, **en ce que** le capot (9) est disposé à déplacement par rapport au boîtier (1), notamment à basculement, et **en ce qu'**un adaptateur (29) est intercalé entre le capot (9) et le boîtier (1), l'adaptateur étant assemblé au boîtier par crantage (21, 22).

2. Système de commutateur selon la revendication 1, **caractérisé en ce qu'**au moins un des composants (15, 16, 32-36) consiste en un commutateur miniature (32-35) ou une diode électroluminescente (15, 16, 36).

3. Système de commutateur selon la revendication 1, **caractérise en ce que** le capot (9) est monté à rotation dans l'adaptateur au moyen d'un palier de pivotement (30).

4. Système de commutateur selon l'une quelconque des revendications 1 à 3, **caractérisé en ce que** l'adaptateur forme avec le capot un mécanisme de crantage (27, 28), constitué d'une came de crantage (27) et d'un ergot de crantage (28) qui s'engagent élastiquement l'un dans l'autre.

5. Système de commutateur selon la revendication 4, **caractérisé en ce que** la came de crantage est formée dans l'adaptateur (29) et l'ergot de crantage (28) est formé par un goujon d'arrêt (28) s'appuyant élastiquement contre le capot.

6. Système de commutateur selon l'une quelconque des revendications 1 à 5, **caractérisé en ce que** le capot (9) est lui aussi conçu comme porte-conducteurs moulé par injection (technique MID).

7. Système de commutateur selon l'une quelconque des revendications 1 à 6, **caractérisé en ce que** le capot sert de bascule de commutation d'un commutateur à bascule.

8. Système de commutateur selon la revendication 6 ou 7, **caractérise en ce qu'**une diode visible de l'extérieur du capot, notamment une diode électroluminescente, est incorporée dans la surface du capot, et **en ce que** l'alimentation en courant est apportée par l'intermédiaire des moyens d'assemblage par crantage (21, 22) ou, respectivement, du palier de pivotement (30) du capot (9).

9. Système de commutateur selon l'une quelconque des revendications précédentes, **caractérisé en ce que** des matériaux répondant aux exigences sont installés sur les régions soumises à des fortes sollicitations mécaniques et/ou électriques.
